# EUROPEAN PATENT APPLICATION

(11) **EP 4 773 349 A1**
(43) Date of publication of application: **08.07.2026**
(21) Application number: 24857810.6
(22) Date of filing: 30.04.2024
(51) Int. Cl.: H01M 10/658

(54) **BATTERY CELL, BATTERY, AND ELECTRICAL DEVICE**

(30) Priority: 31.08.2023 CN 202322372741 U
(71) Applicant: Contemporary Amperex Technology Co., Limited, Ningde, Fujian 352100 (CN)
(72) Inventor: LI, Quanguo, Ningde, Fujian 352100 (CN); YE, Yonghuang, Ningde, Fujian 352100 (CN); JIN, Haizu, Ningde, Fujian 352100 (CN); OUYANG, Shaocong, Ningde, Fujian 352100 (CN); LI, Ying, Ningde, Fujian 352100 (CN)
(74) Representative: Kraus & Lederer PartGmbB
(86) International application number: PCT/CN2024/090709
(87) International publication number: WO 2025/044260

(57) **Abstract**

The present application provides a battery cell (20), a battery (100), and an electrical device. The battery cell (20) comprises: a casing (21), electrode assemblies (22), and a thermal insulation member (23). The casing (21) has an accommodating cavity (211); a plurality of electrode assemblies (22) are provided, and the plurality of electrode assemblies (22) are accommodated in the accommodating cavity (211); the thermal insulation member (23) is arranged between two adjacent electrode assemblies (22), wherein the thickness H of the thermal insulation member (23) and the energy E of each electrode assembly (22) satisfy the relationships: 25 Wh/mm ≤ E/H ≤ 750 Wh/mm.

## Description

### CROSS-REFERENCE TO RELATED APPLICATIONS

The present application refers to Chinese Patent Application No. 202322372741.X, filed on August 31, 2023 and entitled "BATTERY CELL, BATTERY, AND ELECTRIC DEVICE", which is incorporated herein by reference in its entirety.

### TECHNICAL FIELD

The present application pertains to the field of battery technology, and more specifically, relates to a battery cell, a battery, and an electric device.

### BACKGROUND

Energy saving and emission reduction are key to the sustainable development of the automotive industry, and electric vehicles have become an important part of the sustainable development of the automotive industry due to their advantages in energy saving and environmental protection. For electric vehicles, battery technology is an important factor related to their development.

A battery includes a battery cell, and the battery cell usually includes multiple electrode assemblies. During the charging and discharging process of the battery cell, once the battery experiences thermal runaway, it generates a large amount of heat accompanied by a rapid rise in temperature. To delay or block the spread of heat generated by the electrode assemblies, a heat insulation member is usually provided between two adjacent electrode assemblies. However, since the heat insulation member occupies a relatively large amount of internal space of the battery cell, the volume energy density of the battery cell decreases, affecting the endurance performance of the electric vehicle.

### SUMMARY

One of the objectives of the embodiments of the present application is to: provide a battery cell, a battery, and an electric device to solve the technical problem of decreased volume energy density of the battery cell in the related art.

To achieve the above objective, the technical solution adopted by the embodiments of the present application is to provide a battery cell, including:
a housing, having an accommodating cavity;
multiple electrode assemblies, accommodated in the accommodating cavity; and
a heat insulation member, provided between two adjacent electrode assemblies;
where a thickness H of the heat insulation member and an energy E of the electrode assembly satisfy a relationship: 25 Wh/mm ≤ E/H ≤ 750 Wh/mm.

The battery cell provided in the embodiments of the present application has at least the following beneficial effects: the heat insulation member of the battery cell provided in the embodiments of the present application is provided between two adjacent electrode assemblies to reduce the heat spread speed between the two adjacent electrode assemblies. By defining that the thickness H of the heat insulation member and the energy E of the electrode assembly satisfy the relationship: 25 Wh/mm ≤ E/H ≤ 750 Wh/mm, not only the heat insulation performance of the heat insulation member can meet the heat insulation demand between the two adjacent electrode assemblies, but also the situation where the thickness H of the heat insulation member is excessively large can be effectively alleviated. This effectively reduces the space occupied by the heat insulation member, thereby effectively increasing the space utilization rate of the battery cell and the volume energy density of the battery cell.

In some embodiments of the present application, the thickness H of the heat insulation member is 1 mm-6 mm.

By adopting the above technical solution, under the premise that the heat insulation performance of the heat insulation member can meet the heat insulation demand between two adjacent electrode assemblies, the thickness H of the heat insulation member is further limited, and the space occupied by the heat insulation member is further reduced, thereby further increasing the volume energy density of the battery cell.

In some embodiments of the present application, the heat insulation member is provided with heat insulation pores.

By adopting the above technical solution, the heat insulation performance of the heat insulation member is effectively improved, thereby effectively reducing the heat spread speed between two adjacent electrode assemblies and effectively improving the reliability performance of the battery cell.

In some embodiments of the present application, a pore diameter r of the heat insulation pores is 10 nm-50 nm.

By adopting the above technical solution, the heat insulation performance of the heat insulation member is further improved, thereby further reducing the heat spread speed between two adjacent electrode assemblies and further improving the reliability performance of the battery cell.

In some embodiments of the present application, the number of the heat insulation pores is multiple, and a porosity N of the heat insulation member is 95%-98%.

By adopting the above technical solution, the heat insulation performance of the heat insulation member is further improved, thereby further reducing the heat spread speed between two adjacent electrode assemblies and further improving the reliability performance of the battery cell.

In some embodiments of the present application, one port of the heat insulation pore penetrates through a side of the heat insulation member facing one electrode assembly, and the other port of the heat insulation pore penetrates through a side of the heat insulation member facing the other electrode assembly.

By adopting the above technical solution, the heat spread speed between two adjacent electrode assemblies is further reduced, thereby further improving the reliability performance of the battery cell.

In some embodiments of the present application, the battery cell further includes a liquid-repellent layer member, and the liquid-repellent layer member covers a surface of the heat insulation member.

By adopting the above technical solution, the liquid-repellent layer member can block the electrolyte in the battery cell from entering the heat insulation pores of the heat insulation member, thereby further reducing the heat spread speed between two adjacent electrode assemblies and further improving the reliability performance of the battery cell.

In some embodiments of the present application, the liquid-repellent layer member includes at least one of a polytetrafluoroethylene member, a polyvinylidene fluoride member, and a polypropylene member.

By adopting the above technical solution, the liquid-repellent layer member can effectively block the electrolyte in the battery cell from entering the heat insulation pores of the heat insulation member.

In some embodiments of the present application, the liquid-repellent layer member is a liquid-repellent film, and the liquid-repellent film is attached to the surface of the heat insulation member; or the liquid-repellent layer member is a liquid-repellent coating, and the liquid-repellent coating is applied to the surface of the heat insulation member.

By adopting the above technical solution, the liquid-repellent layer member can effectively block the electrolyte in the battery cell from entering the heat insulation pores of the heat insulation member.

In some embodiments of the present application, the heat insulation member is a liquid-repellent heat insulation member.

By adopting the above technical solution, the risk of the electrolyte in the battery cell entering the heat insulation pores of the heat insulation member is effectively reduced, thereby further reducing the heat spread speed between two adjacent electrode assemblies and further improving the reliability performance of the battery cell.

In some embodiments of the present application, the thickness H of the heat insulation member and the energy E of the electrode assembly satisfy a relationship: 150 Wh/mm ≤ E/H ≤ 550 Wh/mm.

By adopting the above technical solution, the heat insulation performance of the heat insulation member can better meet the heat insulation demand between two adjacent electrode assemblies, and the space occupied by the heat insulation member can be further reduced, thereby further increasing the volume energy density of the battery cell.

In some embodiments of the present application, a thermal conductivity of the heat insulation member is 0.01 W/m·K-0.05 W/m·K.

By adopting the above technical solution, the heat spread speed between two adjacent electrode assemblies is further reduced, thereby further improving the reliability performance of the battery cell.

In some embodiments of the present application, the electrode assembly includes a main body portion and a tab, and the heat insulation member is provided between two main body portions and protrudes from the main body portion.

By adopting the above technical solution, the heat insulation area of the heat insulation member is effectively increased, and the speed of heat conduction from an outer side space of one electrode assembly to the other electrode assembly is effectively reduced, thereby further improving the reliability performance of the battery cell.

In some embodiments of the present application, the electrode assembly has a wound structure and includes a main body portion and a tab, the main body portion includes a straight region and a corner region provided on a side portion of the straight region, and the heat insulation member is provided between two straight regions and protrudes from the straight region.

By adopting the above technical solution, the heat insulation area of the heat insulation member is effectively increased, and the speed of heat conduction from an outer side space of one electrode assembly to the other electrode assembly is effectively reduced, thereby further improving the reliability performance of the battery cell.

In some embodiments of the present application, the heat insulation member includes at least one of a porous silicon member, an aerogel member, a polystyrene member, a rock wool member, a glass wool member, and a polyurethane foam member.

By adopting the above technical solution, the heat spread speed between two adjacent electrode assemblies is effectively reduced, thereby further improving the reliability performance of the battery cell.

In some embodiments of the present application, the battery cell is a sodium-ion battery cell, a sodium metal battery cell, a ternary lithium battery cell, or a lithium metal battery cell.

By adopting the above technical solution, under the premise that the heat insulation performance of the heat insulation member can meet the heat insulation demand between two adjacent electrode assemblies, the volume energy density of the above various battery cells is effectively increased.

The embodiments of the present application further provide a battery, including the battery cell described in any one of the above embodiments.

The battery provided in the embodiments of the present application has at least the following beneficial effects: since the battery provided in the embodiments of the present application adopts the battery cell described in any one of the above embodiments, the volume energy density of the battery is effectively increased.

The embodiments of the present application further provide an electric device, including the above battery.

The electric device provided in the embodiments of the present application has at least the following beneficial effects: since the electric device provided in the embodiments of the present application adopts the battery described in any one of the above embodiments, the endurance performance of the electric device is effectively improved.

### BRIEF DESCRIPTION OF DRAWINGS

To more clearly illustrate the technical solutions in the embodiments of the present application, the drawings to be used in the description of the embodiments or the prior art will be briefly introduced below. Obviously, the drawings described below are only some embodiments of the present application. For those of ordinary skill in the art, other drawings can also be obtained based on these drawings without creative effort.
FIG. 1 is a schematic structural diagram of a vehicle according to an embodiment of the present application;
FIG. 2 is an exploded schematic structural diagram of a battery in the vehicle shown in FIG. 1;
FIG. 3 is a schematic structural diagram of a battery cell in the battery shown in FIG. 2;
FIG. 4 is a front view schematic structural diagram of the battery cell shown in FIG. 3;
FIG. 5 is a cross-sectional schematic structural diagram of the battery cell shown in FIG. 4 along A-A direction;
FIG. 6 is an enlarged schematic structural diagram at position B of the battery cell shown in FIG. 5;
FIG. 7 is a schematic structural diagram of a heat insulation member according to an embodiment of the present application; and
FIG. 8 is a schematic diagram of an assembly structure of the heat insulation member and the electrode assembly according to an embodiment of the present application.

Reference numerals in the drawings are:
1000. vehicle;
100. battery;
10. box; 11. first portion; 12. second portion;
20. battery cell; 21. housing; 211. accommodating cavity; 22. electrode assembly; 221. main body portion; 2211. straight region; 2212. corner region; 222. tab; 23. heat insulation member; 231. heat insulation pore; 232. heat insulation main body; 233. first protruding portion; 234. second protruding portion; 24. liquid-repellent layer member; 25. cover;
200. controller; and
300. motor.

### DESCRIPTION OF EMBODIMENTS

In order to make the technical problems to be solved, the technical solutions, and the beneficial effects of the present application clearer, the present application will be further described in detail below with reference to the accompanying drawings and embodiments. It should be understood that the specific embodiments described herein are only used to explain the present application and are not used to limit the present application.

It should be noted that when an element is referred to as being "fixed to" or "provided on" another element, it can be directly on the another element or indirectly on the another element. When an element is referred to as being "connected to" another element, it can be directly connected to the another element or indirectly connected to the another element.

It should be understood that the terms "length", "width", "upper", "lower", "front", "rear", "left", "right", "vertical", "horizontal", "top", "bottom", "inner", "outer", and the like indicating orientation or positional relationship are based on the orientation or positional relationship shown in the drawings, which are only for the convenience of describing the present application and simplifying the description, and do not indicate or imply that the means or element referred to must have a specific orientation, be constructed and operated in a specific orientation, and therefore should not be construed as limiting the present application.

In addition, the terms "first" and "second" are only used for descriptive purposes, and should not be understood as indicating or implying relative importance or implicitly indicating the number of technical features indicated. Thus, the features defined as "first" and "second" may explicitly or implicitly include one or more of the features. In the description of the present application, the meaning of "multiple" is two or more, unless otherwise specifically defined.

At present, from the development of the market situation, the application of batteries is becoming more and more widespread. Batteries are not only used in energy storage power systems such as hydropower, thermal power, wind power, and solar power stations, but also widely used in electric bicycles, electric motorcycles, electric vehicles, and other electric vehicles, as well as military equipment, aerospace, and other fields. With the continuous expansion of battery application fields, the market demand is also continuously increasing.

In the related art, a battery includes a battery cell, and the battery cell is the smallest storage unit for storing electrical energy. The battery cell usually includes multiple electrode assemblies. During the charging and discharging process of the battery cell, the electrode assemblies generate heat, and especially when thermal runaway occurs near the electrode assemblies, the electrode assemblies generate more heat. To reduce the spread speed of the heat generated by the electrode assemblies, a heat insulation member is usually provided between two adjacent electrode assemblies. At the same time, to ensure that the heat insulation member can effectively isolate heat, the heat insulation member is usually thickened. However, this easily causes the thickness of the heat insulation member to be excessively large, causing the heat insulation member to occupy more internal space of the battery cell, thereby leading to a decrease in the volume energy density of the battery cell and affecting the endurance performance of the electric vehicle.

In order to increase the volume energy density of the battery cell, the heat insulation member of the battery cell provided in the embodiments of the present application is provided between two adjacent electrode assemblies to reduce the heat spread speed between the two adjacent electrode assemblies. By defining that the thickness H of the heat insulation member and the energy E of the electrode assembly satisfy the relationship: 25 Wh/mm ≤ E/H ≤ 750 Wh/mm, not only the heat insulation performance of the heat insulation member can meet the heat insulation demand between the two adjacent electrode assemblies, but also the situation where the thickness H of the heat insulation member is excessively large can be effectively alleviated. This effectively reduces the space occupied by the heat insulation member, thereby effectively increasing the space utilization rate of the battery cell and the volume energy density of the battery cell.

According to the battery cell, battery, and electric device using the battery as a power source disclosed in the embodiments of the present application, the electric device may be, but is not limited to, a vehicle, a mobile phone, a portable device, a notebook computer, a ship, a spacecraft, an electric toy, and an electric tool. The vehicle may be a fuel vehicle, a gas vehicle, or a new energy vehicle, and the new energy vehicle may be a pure electric vehicle, a hybrid electric vehicle, an extended-range vehicle, or the like. The spacecraft includes an airplane, a rocket, a space shuttle, a spaceship, and the like. The electric toy includes fixed or mobile electric toys, such as a game console, an electric vehicle toy, an electric ship toy, and an electric airplane toy. The electric tool includes metal cutting electric tools, grinding electric tools, assembly electric tools, and railway electric tools, such as an electric drill, an electric grinder, an electric wrench, an electric screwdriver, an electric hammer, an impact drill, a concrete vibrator, and an electric planer.

The following embodiments are described by taking a vehicle as an example of an electric device according to an embodiment of the present application for convenience of explanation.

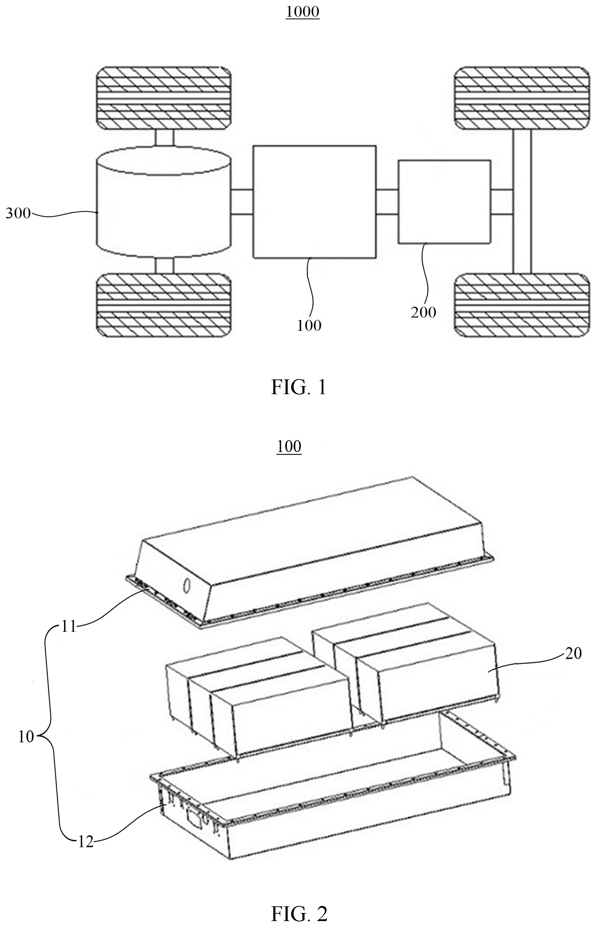

Referring to FIG. 1, which is a schematic structural diagram of a vehicle 1000 according to an embodiment of the present application. The vehicle 1000 may be a fuel vehicle, a gas vehicle, or a new energy vehicle, and the new energy vehicle may be a pure electric vehicle, a hybrid electric vehicle, an extended-range vehicle, or the like. A battery 100 is provided inside the vehicle 1000, and the battery 100 may be provided at the bottom, head, or tail of the vehicle 1000. The battery 100 may be used for power supply of the vehicle 1000, for example, the battery 100 may serve as an operating power source of the vehicle 1000. The vehicle 1000 may further include a controller 200 and a motor 300, and the controller 200 is used to control the battery 100 to supply power to the motor 300, for example, for starting, navigation, and running power needs of the vehicle 1000.

In some embodiments of the present application, the battery 100 can serve not only as an operating power source of the vehicle 1000, but also as a driving power source of the vehicle 1000, replacing or partially replacing fuel or natural gas to provide driving power for the vehicle 1000.

Referring to FIG. 2, which is an exploded schematic diagram of a battery 100 provided in an embodiment of the present application. The battery 100 includes a box 10 and a battery cell 20, and the battery cell 20 is accommodated in the box 10. The box 10 is used to provide an accommodating space for the battery cell 20, and the box 10 may adopt a variety of structures. In some embodiments, the box 10 may include a first portion 11 and a second portion 12, the first portion 11 and the second portion 12 fit with each other, and the first portion 11 and the second portion 12 together define an accommodating space for accommodating the battery cell 20. The second portion 12 may be a hollow structure with one end open, the first portion 11 may be a plate-like structure, and the first portion 11 covers the open side of the second portion 12, so that the first portion 11 and the second portion 12 together define the accommodating space. The first portion 11 and the second portion 12 may also both be hollow structures with one side open, and the open side of the first portion 11 engages with the open side of the second portion 12. Certainly, the box 10 formed by the first portion 11 and the second portion 12 may have various shapes, such as a cylinder and a cuboid.

In some embodiments, the box 10 may serve as part of the chassis structure of the vehicle 1000. For example, part of the box 10 may become at least part of the floor of the vehicle 1000, or part of the box 10 may become at least part of the cross beam and longitudinal beam of the vehicle 1000.

In the battery 100, the number of the battery cells 20 may be multiple, and the multiple battery cells 20 may be connected in series, in parallel, or in a hybrid manner, where the hybrid manner means that there are both series and parallel connections among the multiple battery cells 20. The multiple battery cells 20 may be directly connected in series, in parallel, or in a hybrid manner, and then the whole formed by the multiple battery cells 20 is accommodated in the box 10. Certainly, the battery 100 may also be formed by first connecting multiple battery cells 20 in series, in parallel, or in a hybrid manner to form a battery module, multiple battery modules are connected in series, in parallel, or in a hybrid manner to form a whole, and the whole is accommodated in the box 10. The battery 100 may further include other functional components, for example, the battery 100 may further include a bus member for achieving electrical connection between multiple battery cells 20.

Each battery cell 20 may be a secondary battery or a primary battery, where the secondary battery refers to a battery cell 20 that can continue to be used by activating the active material through charging after the battery cell 20 is discharged, and the primary battery refers to a battery cell 20 that cannot continue to be used by activating the active material through charging after the electrical energy of the battery cell 20 is exhausted. The battery cell 20 may also be a lithium-ion battery, a ternary lithium battery cell, a sodium-ion battery, a sodium-lithium ion battery, a lithium metal battery, a sodium metal battery, a lithium-sulfur battery, a magnesium-ion battery, a nickel-metal hydride battery, a nickel-cadmium battery, and a lead-acid battery, but is not limited thereto. The battery cell 20 may be a cylindrical battery cell, a prismatic battery cell, a pouch battery cell, or a battery cell 20 of other shapes. The prismatic battery cell includes a square shell battery cell, a blade-shaped battery cell, a multi-prism battery, and the multi-prism battery is, for example, a hexagonal prism battery. The present application has no particular limitation.

Certainly, in some embodiments, the battery 100 may not include the box 10, but multiple battery cells 20 are electrically connected and assembled into the vehicle 1000 after being formed into a whole by necessary fixing structures.

To illustrate the technical solution provided in the present application, the following detailed description is made in combination with specific drawings and embodiments.

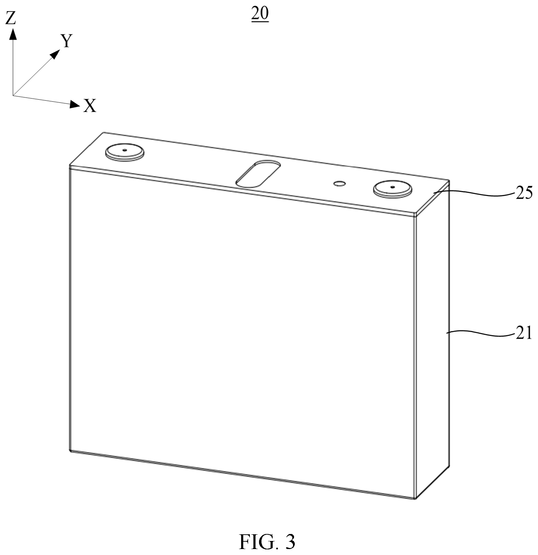

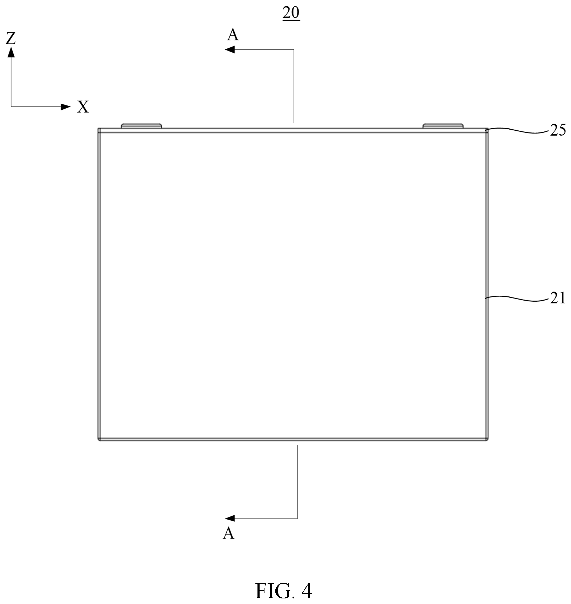

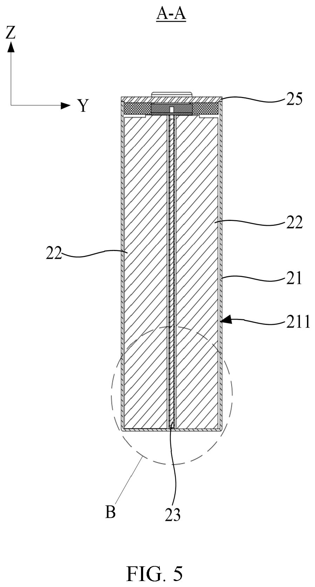

According to a first aspect, referring to FIGs. 3 to 6 together, an embodiment of the present application provides a battery cell 20, including a housing 21, an electrode assembly 22, and a heat insulation member 23. The housing 21 has an accommodating cavity 211, the number of the electrode assemblies 22 is multiple, the multiple electrode assemblies 22 are accommodated in the accommodating cavity 211, and the heat insulation member 23 is provided between two adjacent electrode assemblies 22, where a thickness H of the heat insulation member 23 and an energy E of the electrode assembly 22 satisfy a relationship: 25 Wh/mm ≤ E/H ≤ 750 Wh/mm.

The housing 21 is a component used to provide an internal environment (that is, the above accommodating cavity 211) of the battery cell 20, where the internal environment may be used to accommodate the electrode assembly 22 and other functional components. The housing 21 may be an independent component, an opening may be provided on the housing 21, and components such as the electrode assembly 22 may be accommodated in the internal environment through the opening. The shape of the housing 21 may be determined according to the specific shape of the electrode assembly 22, and the shape of the housing 21 may be, but is not limited to, a cuboid shape, a cylindrical shape, and a hexagonal prism shape. Similarly, the size of the housing 21 may be determined according to the size of the electrode assembly 22. The material of the housing 21 may be, but is not limited to, copper, iron, aluminum, stainless steel, and aluminum alloy.

The battery cell 20 may further include a cover 25, and the cover 25 refers to a component that covers the opening of the housing 21 to isolate the internal environment of the battery cell 20 from the external environment. The shape of the cover 25 may be adapted to the shape of the housing 21 to cooperate with the housing 21. In some embodiments, the cover 25 may be made of a material with certain hardness and strength, so that the cover 25 is not easily deformed when squeezed or collided, enabling the battery cell 20 to have higher structural strength, and the reliability performance can also be improved. The material of the cover 25 may be, but is not limited to, copper, iron, aluminum, stainless steel, aluminum alloy, and plastic. In some embodiments, a pressure relief mechanism may also be provided on the cover 25 for releasing internal pressure when the internal pressure or temperature of the battery cell 20 reaches a threshold. In some embodiments, an insulating partition may also be provided on the cover 25, and the insulating partition may be used to isolate electrical connection components in the housing 21 from the cover 25 to reduce the risk of short circuit. The material of the insulating partition may be, but is not limited to, plastic and rubber.

The electrode assembly 22 is a component in the battery cell 20 where electrochemical reactions occur. The number of the electrode assemblies 22 may be determined according to actual application needs, for example, the number of the electrode assemblies 22 is two, three, four, five, or the like. The shape of the electrode assembly 22 may be, but is not limited to, cylindrical, flat, or multi-prism. The electrode assembly 22 is mainly made of a positive electrode sheet, a negative electrode sheet, and a separator by a winding process or a stacking process. In some embodiments, multiple positive electrode sheets and multiple negative electrode sheets may be provided respectively, and the multiple positive electrode sheets and the multiple negative electrode sheets are alternately stacked. In some other embodiments, multiple positive electrode sheets may be provided, and the negative electrode sheet is folded to form multiple stacked folding sections, with a positive electrode sheet sandwiched between adjacent folding sections. In still some other embodiments, both the positive electrode sheet and the negative electrode sheet are folded to form multiple stacked folding sections. In some embodiments, multiple separators may be provided, and the multiple separators are respectively provided between any adjacent positive electrode sheets or negative electrode sheets. In some other embodiments, the separator may be continuously provided between any adjacent positive electrode sheets or negative electrode sheets by folding or winding. The positive electrode sheet may include a positive electrode current collector and a positive electrode active material provided on at least one surface of the positive electrode current collector. As an example, the positive electrode current collector has two opposite surfaces in its thickness direction, and the positive electrode active material is provided on any one or both of the two opposite surfaces of the positive electrode current collector. The negative electrode sheet may include a negative electrode current collector and a negative electrode active material provided on at least one surface of the negative electrode current collector. As an example, the negative electrode current collector has two opposite surfaces in its thickness direction, and the negative electrode active material is provided on any one or both of the two opposite surfaces of the negative electrode current collector. In some embodiments, the separator is a separating film, the present application has no particular limitation on the type of the separating film, and any well-known porous structure separating film with good chemical stability and mechanical stability may be selected. The battery cell 20 may further include an electrolyte, which plays a role of conducting ions between the positive electrode sheet and the negative electrode sheet. The present application has no specific limitation on the type of the electrolyte, which may be selected according to needs. During the charging and discharging process of the battery cell 20, active ions (such as lithium ions or sodium ions) shuttle between the positive electrode sheet and the negative electrode sheet through the electrolyte to intercalate and deintercalate. The separator is provided between the positive electrode sheet and the negative electrode sheet, which can prevent short circuit between the positive and negative electrodes, and allow active ions to pass through.

The heat insulation member 23 is a component used to block heat conduction between two adjacent electrode assemblies 22. In some embodiments, the number of the electrode assemblies 22 is two, and the heat insulation member 23 is provided between the two electrode assemblies 22. In some other embodiments, the number of the electrode assemblies 22 is two or more, and the heat insulation member 23 may be provided between every two adjacent electrode assemblies 22; or the multiple electrode assemblies 22 may be divided into multiple groups, and the heat insulation member 23 is provided between every two adjacent groups of electrode assemblies 22. The heat insulation member 23 may be, but is not limited to, a heat insulation pad, a heat insulation plate, and a heat insulation film. The material of the heat insulation member 23 includes, but is not limited to, porous silicon, aerogel, polystyrene, rock wool, glass wool, and polyurethane foam. In other words, the heat insulation member 23 includes at least one of a porous silicon member, an aerogel member, a polystyrene member, a rock wool member, a glass wool member, and a polyurethane foam member. In some embodiments, the heat insulation member 23 covers the entire surface of one electrode assembly 22 relative to the other electrode assembly 22. Certainly, in some other embodiments, the heat insulation member 23 may also cover only part of the surface of one electrode assembly 22 relative to the other electrode assembly 22. The heat insulation member 23 may be attached between two adjacent electrode assemblies 22, and the heat insulation member 23 may also be spaced from the electrode assembly 22.

The energy E of the electrode assembly 22 refers to the maximum electrical capacity stored by the electrode assembly 22. The measurement method of the energy E of the electrode assembly 22 is: under the condition of an ambient temperature of 25°C, a constant current, and a constant voltage, the battery cell 20 is fully charged, and the battery cell 20 is then fully discharged under constant current conditions, where the total discharged electrical capacity is Em, and the total electrical capacity Em divided by the number of electrode assemblies 22 of the battery cell 20 yields the energy E of each electrode assembly 22. The thickness H of the heat insulation member 23 refers to the dimension of the heat insulation member 23 in the direction from one electrode assembly 22 to the other electrode assembly 22. For example, the thickness H of the heat insulation member 23 is the dimension of the heat insulation member 23 in the Y-axis direction as shown in FIGs. 3, 5, and 8. It should be noted that the thickness of the heat insulation member 23 refers to the thickness obtained by measuring the heat insulation member 23 after the heat insulation member 23 is taken out of the accommodating cavity 211 and the heat insulation member 23 is restored to a state where the thickness no longer changes. The thickness H of the heat insulation member 23 and the energy E of the electrode assembly 22 satisfy the relationship: 25 Wh/mm ≤ E/H ≤ 750 Wh/mm, that is, the ratio of the energy E of the electrode assembly 22 to the thickness H of the heat insulation member 23 is greater than or equal to 25 Wh/mm (watt-hours/millimeter) and less than or equal to 750 Wh/mm (watt-hours/millimeter), for example, the ratio of the energy E of the electrode assembly 22 to the thickness H of the heat insulation member 23 may be 25 Wh/mm, 100 Wh/mm, 200 Wh/mm, 300 Wh/mm, 400 Wh/mm, 500 Wh/mm, 600 Wh/mm, 700 Wh/mm, 750 Wh/mm, or the like.

To facilitate understanding of the technical solution of the present application, the embodiments of the present application are further described below in combination with Table 1, Table 2, and Table 3.

**Table 1**

| | Energy E of electrode assembly (watt-hour) | Thickness H of heat insulation member (millimeter) | E/H | Heat transfer time t (hour) | Temperature difference ΔT on two opposite sides of heat insulation member (°C) |
|---|---|---|---|---|---|
| 1 | 70 | 7 | 10 | 0.25 | 104 |
| 2 | 80 | 7 | 11.4 | 0.3 | 116 |
| 3 | 90 | 9 | 10 | 0.367 | 133 |
| 4 | 100 | 11 | 9.1 | 0.417 | 169 |

Table 1 shows the heat insulation effect of the heat insulation member 23 between two adjacent electrode assemblies 22 when the ratio of the energy E of the electrode assembly 22 to the thickness H of the heat insulation member 23 is less than 25 Wh/mm.

**Table 2**

| | Energy E of electrode assembly (watt-hour) | Thickness H of heat insulation member (millimeter) | E/H | Heat transfer time t (hour) | Temperature difference ΔT on two opposite sides of heat insulation member (°C) |
|---|---|---|---|---|---|
| 1 | 150 | 0.1 | 1500 | 0.0014 | 10 |
| 2 | 224 | 0.2 | 1120 | 0.0028 | 12 |
| 3 | 456 | 0.3 | 1520 | 0.0064 | 17 |
| 4 | 778 | 0.4 | 1945 | 0.0136 | 23 |

Table 2 shows the heat insulation effect of the heat insulation member 23 between two adjacent electrode assemblies 22 when the ratio of the energy E of the electrode assembly 22 to the thickness H of the heat insulation member 23 is greater than 750 Wh/mm.

**Table 3**

| | Energy E of electrode assembly (watt-hour) | Thickness H of heat insulation member (millimeter) | E/H | Heat transfer time t (hour) | Temperature difference ΔT on two opposite sides of heat insulation member (°C) |
|---|---|---|---|---|---|
| 1 | 50 | 2 | 25 | 0.025 | 30 |
| 2 | 150 | 1 | 150 | 0.025 | 31 |
| 3 | 224 | 1 | 224.0 | 0.0583 | 44 |
| 4 | 456 | 2 | 228.0 | 0.10 | 52 |
| 5 | 778 | 3 | 259.3 | 0.15 | 78 |
| 6 | 1500 | 2 | 750 | 0.13 | 88 |

Table 3 shows the heat insulation effect of the heat insulation member 23 between two adjacent electrode assemblies 22 when the ratio of the energy E of the electrode assembly 22 to the thickness H of the heat insulation member 23 is within the range of 25 Wh/mm-750 Wh/mm.

It should be noted that in Table 1, Table 2, and Table 3, the above heat transfer time t refers to the time required for heat to conduct from one side of the heat insulation member 23 facing one electrode assembly 22 to the side of the heat insulation member 23 facing the other electrode assembly 22, and the temperature difference ΔT on the two opposite sides of the heat insulation member 23 refers to the temperature difference between the side of the heat insulation member 23 facing one electrode assembly 22 and the side of the heat insulation member 23 facing the other electrode assembly 22 after heat is conducted from the side of the heat insulation member 23 facing one electrode assembly 22 to the side of the heat insulation member 23 facing the other electrode assembly 22. Temperature sensing devices may be provided on the side of the heat insulation member 23 facing one electrode assembly 22 and the side of the heat insulation member 23 facing the other electrode assembly 22, and the temperature sensing devices are electrically connected to an external control module (for example, a battery management module of the battery 100). In the case where one electrode assembly 22 experiences thermal runaway, the two temperature sensing devices respectively measure the peak temperature on the side of the heat insulation member 23 facing the electrode assembly 22 experiencing thermal runaway and the peak temperature on the side of the heat insulation member 23 facing the electrode assembly 22 not experiencing thermal runaway, and the external control module can calculate the temperature difference ΔT on the two opposite sides of the heat insulation member 23 based on the two peak temperature data, and can also calculate the time required for the side of the heat insulation member 23 facing the electrode assembly 22 not experiencing thermal runaway to reach the peak temperature from the initial temperature, that is, the heat transfer time t is obtained.

By comparing Table 1, Table 2, and Table 3, it can be found that when the ratio of the energy E of the electrode assembly 22 to the thickness H of the heat insulation member 23 is less than 25 Wh/mm, the heat transfer time t and the temperature difference ΔT on the two opposite sides of the heat insulation member 23 are both larger, meaning that the time required for heat to conduct from one side of the heat insulation member 23 facing one electrode assembly 22 to the side of the heat insulation member 23 facing the other electrode assembly 22 is longer, the amount of heat conducted from one side of the heat insulation member 23 facing one electrode assembly 22 to the side of the heat insulation member 23 facing the other electrode assembly 22 is less, and the heat insulation effect of the heat insulation member 23 between two adjacent electrode assemblies 22 is better. But the thickness H of the heat insulation member 23 is larger, causing the heat insulation member 23 to occupy too much space, which leads to a decrease in the volume energy density of the battery cell 20. When the ratio of the energy E of the electrode assembly 22 to the thickness H of the heat insulation member 23 is greater than 750 Wh/mm, the heat transfer time t and the temperature difference ΔT on the two opposite sides of the heat insulation member 23 are both less, meaning that the time required for heat to conduct from one side of the heat insulation member 23 facing one electrode assembly 22 to the side of the heat insulation member 23 facing the other electrode assembly 22 is shorter, the amount of heat conducted from one side of the heat insulation member 23 facing one electrode assembly 22 to the side of the heat insulation member 23 facing the other electrode assembly 22 is more, the heat insulation effect of the heat insulation member 23 between two adjacent electrode assemblies 22 is poorer, and the heat insulation member 23 cannot meet the heat insulation demand between two adjacent electrode assemblies 22. This leads to a decrease in the reliability performance of the battery cell 20. When the ratio of the energy E of the electrode assembly 22 to the thickness H of the heat insulation member 23 is within the range of 25 Wh/mm-750 Wh/mm, the heat transfer time t and the temperature difference ΔT on the two opposite sides of the heat insulation member 23 are both larger, meaning that the time required for heat to conduct from one side of the heat insulation member 23 facing one electrode assembly 22 to the side of the heat insulation member 23 facing the other electrode assembly 22 is longer, the amount of heat conducted from one side of the heat insulation member 23 facing one electrode assembly 22 to the side of the heat insulation member 23 facing the other electrode assembly 22 is less, the heat insulation effect of the heat insulation member 23 between two adjacent electrode assemblies 22 is better, enabling the battery cell 20 to have good reliability performance, and the thickness H of the heat insulation member 23 is also smaller, reducing the space occupied by the heat insulation member 23, thereby effectively increasing the volume energy density of the battery cell 20.

The heat insulation member 23 of the battery cell 20 provided in the embodiments of the present application is provided between two adjacent electrode assemblies 22 to reduce the heat spread speed between the two adjacent electrode assemblies 22. By defining that the thickness H of the heat insulation member 23 and the energy E of the electrode assembly 22 satisfy the relationship: 25 Wh/mm ≤ E/H ≤ 750 Wh/mm, not only the heat insulation performance of the heat insulation member 23 can meet the heat insulation demand between two adjacent electrode assemblies 22, but also the situation where the thickness H of the heat insulation member 23 is excessively large can be effectively alleviated. This effectively reduces space occupied by the heat insulation member 23, thereby effectively increasing the space utilization rate of the battery cell 20 and the volume energy density of the battery cell 20.

In some embodiments of the present application, in order to make the heat insulation performance of the heat insulation member 23 better meet the heat insulation demand between two adjacent electrode assemblies 22, and further reduce the space occupied by the heat insulation member 23, thereby further increasing the volume energy density of the battery cell 20, the ratio of the thickness H of the heat insulation member 23 to the energy E of the electrode assembly 22 is 150 Wh/mm-550 Wh/mm.

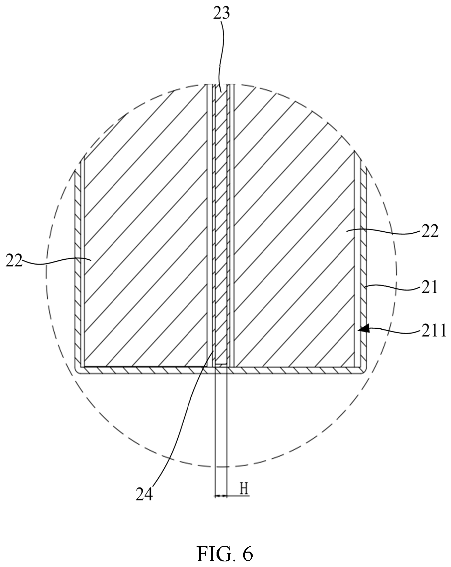

In some embodiments of the present application, referring to FIG. 6, the thickness H of the heat insulation member 23 is 1 mm (millimeter) to 6 mm (millimeter).

For example, the thickness H of the heat insulation member 23 may be 1 mm, 2 mm, 3 mm, 4 mm, 5 mm, 6 mm, or the like.

When the thickness H of the heat insulation member 23 is 1 mm, the energy E of the electrode assembly 22 can be up to 750 Wh, and when the thickness H of the heat insulation member 23 is 6 mm, the energy E of the electrode assembly 22 can be at least 150 Wh. In other words, the energy E of the electrode assembly 22 is 150 Wh-750 Wh, for example, the energy E of the electrode assembly 22 may be 150 Wh, 250 Wh, 350 Wh, 450 Wh, 550 Wh, 650 Wh, 750 Wh, or the like.

By adopting the above technical solution, under the premise that the heat insulation performance of the heat insulation member 23 can meet the heat insulation demand between two adjacent electrode assemblies 22, the thickness H of the heat insulation member 23 is further limited, and the space occupied by the heat insulation member 23 is further reduced, thereby further increasing the volume energy density of the battery cell 20.

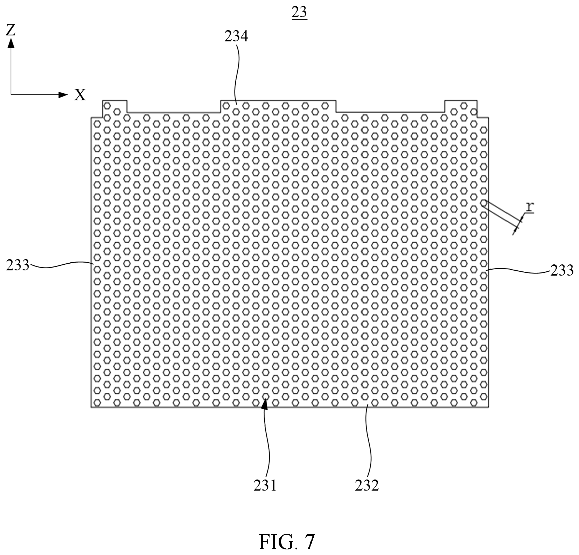

In some embodiments of the present application, referring to FIG. 7, the heat insulation member 23 is provided with heat insulation pores 231.

The heat insulation pore 231 is a hollow portion of the heat insulation member 23, the heat insulation pore 231 may be a through-hole structure penetrating any two surfaces of the heat insulation member 23, and the heat insulation pore 231 may also be a blind hole structure with one end penetrating one surface of the heat insulation member 23 and the other end closed. The heat insulation pore 231 may also be a hollow structure with both ends closed. The heat insulation pore 231 may be formed on the heat insulation member 23 by machining, or the heat insulation member 23 may be made of a material with pores to form the heat insulation pore 231 on the heat insulation member 23.

In the related art, the thermal conductivity of solids is usually greater than the thermal conductivity of liquids, and the thermal conductivity of liquids is usually greater than the thermal conductivity of gases. By providing the heat insulation pore 231 on the heat insulation member 23, at least the solid heat conduction path of the heat insulation member 23 can be reduced, and the heat insulation performance of the heat insulation member 23 is effectively improved, thereby effectively reducing the heat spread speed between two adjacent electrode assemblies 22 and effectively improving the reliability performance of the battery cell 20.

In some embodiments of the present application, referring to FIG. 7, the pore diameter r of the heat insulation pore 231 is 10 nm (nanometer) to 50 nm (nanometer).

It should be noted that the pore diameter distribution of the heat insulation pore 231 may be set with reference to the national standard GB/T 21650.2-2008 and the WI-PCA-124 pore diameter distribution analysis work guide, for example, the pore diameter of the heat insulation pore 231 may be 10 nm, 20 nm, 30 nm, 40 nm, 50 nm, or the like.

In the related art, the mean free path of gas molecules is about 68 nm. By limiting the pore diameter r of the heat insulation pore 231 within the range of 10 nm-50 nm, heat is difficult to conduct from one side of the heat insulation member 23 facing one electrode assembly 22 to the side of the heat insulation member 23 facing the other electrode assembly 22 through the heat insulation pore 231 using gas (such as air) as a heat conduction medium, and the heat insulation performance of the heat insulation member 23 is further improved, thereby further reducing the heat spread speed between two adjacent electrode assemblies 22 and further improving the reliability performance of the battery cell 20.

In some embodiments of the present application, referring to FIG. 7, the number of the heat insulation pores 231 is multiple, and the porosity N of the heat insulation member 23 is 95%-98%.

The number of the heat insulation pores 231 may be determined according to actual application needs, for example, the number of the heat insulation pores 231 may be 100, 200, 300, 400, 500, 600, 700, 800, 900, 1000, or the like. The multiple heat insulation pores 231 may be evenly distributed on the heat insulation member 23 or unevenly distributed on the heat insulation member 23.

The porosity N of the heat insulation member 23 refers to the proportion of the total volume of the multiple heat insulation pores 231 to the volume of the heat insulation member 23. For example, the porosity N of the heat insulation member 23 may be 95%, 96%, 97%, 98%, or the like.

It should be noted that the measurement method for measuring the porosity N of the heat insulation member 23 may be selected according to actual application needs, for example, the displacement method with the use of inert gas (helium) with small molecular diameter may be used, combined with Archimedes' principle and Boyle's law, to measure the actual volume V1 of the heat insulation member 23, and a measurement tool is used to measure the apparent volume V2 of the heat insulation member 23. According to the formula: porosity N = (apparent volume V2 - actual volume V1)/apparent volume V2 × 100%, the porosity N of the heat insulation member 23 can be calculated.

By limiting the porosity N of the heat insulation member 23 within the range of 95%-98%, at least the solid heat conduction path of the heat insulation member 23 can be further reduced, and the heat insulation performance of the heat insulation member 23 is further improved, thereby further reducing the heat spread speed between two adjacent electrode assemblies 22 and further improving the reliability performance of the battery cell 20.

In some embodiments of the present application, the porosity N of the heat insulation member 23 is 95%-98%, and the pore diameter r of the heat insulation pore 231 is 10 nm-50 nm, that is, the porosity N of the heat insulation member 23 and the pore diameter r of the heat insulation pore 231 satisfy a relationship: 9.5 ≤ N × r ≤ 49.

To facilitate understanding of the technical solution of the present application, the embodiments of the present application are further described below in combination with Table 4 and Table 5.

**Table 4**

| | Porosity N of heat insulation member | Pore diameter r of heat insulation pore (nanometer) | N × r | Heat transfer time t (hour) | Temperature difference ΔT on two opposite sides of heat insulation member (°C) |
|---|---|---|---|---|---|
| 1 | 78% | 4 | 3.1 | 0.00222 | 11 |
| 2 | 83% | 7 | 5.8 | 0.00528 | 18 |
| 3 | 89% | 120 | 106.8 | 0.01250 | 22 |
| 4 | 92% | 230 | 211.6 | 0.01583 | 27 |

Table 4 shows the heat insulation effect of the heat insulation member 23 between two adjacent electrode assemblies 22 when the product of the porosity N of the heat insulation member 23 and the pore diameter r of the heat insulation pore 231 is less than 9.5 and when the product of the porosity N of the heat insulation member 23 and the pore diameter r of the heat insulation pore 231 is greater than 49.

**Table 5**

| | Porosity N of heat insulation member | Pore diameter r of heat insulation pore (nanometer) | N × r | Heat transfer time t (hour) | Temperature difference ΔT on two opposite sides of heat insulation member (°C) |
|---|---|---|---|---|---|
| 1 | 95% | 15 | 14.3 | 0.038 | 38 |
| 2 | 96% | 25 | 24.0 | 0.073 | 51 |
| 3 | 97% | 36 | 34.9 | 0.112 | 77 |
| 4 | 98% | 48 | 47.0 | 0.167 | 99 |

Table 5 shows the heat insulation effect of the heat insulation member 23 between two adjacent electrode assemblies 22 when the product of the porosity N of the heat insulation member 23 and the pore diameter r of the heat insulation pore 231 is within the range of 9.5-49.

It should be noted that in Table 4 and Table 5, the above heat transfer time t refers to the time required for heat to conduct from one side of the heat insulation member 23 facing one electrode assembly 22 to the side of the heat insulation member 23 facing the other electrode assembly 22, and the temperature difference ΔT on the two opposite sides of the heat insulation member 23 refers to the temperature difference between the side of the heat insulation member 23 facing one electrode assembly 22 and the side of the heat insulation member 23 facing the other electrode assembly 22 after heat is conducted from the side of the heat insulation member 23 facing one electrode assembly 22 to the side of the heat insulation member 23 facing the other electrode assembly 22.

By comparing Table 4 and Table 5, it can be found that when the product of the porosity N of the heat insulation member 23 and the pore diameter r of the heat insulation pore 231 is less than 9.5 and when the product of the porosity N of the heat insulation member 23 and the pore diameter r of the heat insulation pore 231 is greater than 49, the heat transfer time t and the temperature difference ΔT on the two opposite sides of the heat insulation member 23 are both less, meaning that the time required for heat to conduct from one side of the heat insulation member 23 facing one electrode assembly 22 to the side of the heat insulation member 23 facing the other electrode assembly 22 is shorter, and the amount of heat conducted from one side of the heat insulation member 23 facing one electrode assembly 22 to the side of the heat insulation member 23 facing the other electrode assembly 22 is more. The heat insulation effect of the heat insulation member 23 between two adjacent electrode assemblies 22 is poorer, which leads to a decrease in the reliability performance of the battery cell 20. When the product of the porosity N of the heat insulation member 23 and the pore diameter r of the heat insulation pore 231 is within the range of 9.5-49, the heat transfer time t and the temperature difference ΔT on the two opposite sides of the heat insulation member 23 are both larger, meaning that the time required for heat to conduct from one side of the heat insulation member 23 facing one electrode assembly 22 to the side of the heat insulation member 23 facing the other electrode assembly 22 is longer, and the amount of heat conducted from one side of the heat insulation member 23 facing one electrode assembly 22 to the side of the heat insulation member 23 facing the other electrode assembly 22 is less. The heat insulation effect of the heat insulation member 23 between two adjacent electrode assemblies 22 is better, thereby effectively reducing the heat spread speed between two adjacent electrode assemblies 22, and effectively improving the reliability performance of the battery cell 20.

In some embodiments of the present application, referring to FIG. 7, one port of the heat insulation pore 231 penetrates through a side of the heat insulation member 23 facing one electrode assembly 22, and the other port of the heat insulation pore 231 penetrates through a side of the heat insulation member 23 facing the other electrode assembly 22.

In other words, the heat insulation pore 231 is a through-hole structure, and the extension direction of the heat insulation pore 231 is substantially the direction from one electrode assembly 22 to the other electrode assembly 22. In this way, in the case where the electrode assembly 22 experiences thermal runaway, heat enters the heat insulation pore 231 through one port of the heat insulation pore 231, leaves the heat insulation pore 231 from the other port of the heat insulation pore 231, and finally conducts to the other electrode assembly 22. In this process, the heat needs to pass through the entire heat insulation pore 231 from one electrode assembly 22 along the length direction of the heat insulation pore 231 before it can conduct to the other electrode assembly 22, which can further reduce the heat spread speed between two adjacent electrode assemblies 22, thereby further improving the reliability performance of the battery cell 20.

In some embodiments of the present application, referring to FIG. 6, the battery cell 20 further includes a liquid-repellent layer member 24, and the liquid-repellent layer member 24 covers the surface of the heat insulation member 23.

The liquid-repellent layer member 24 is a component used to separate the heat insulation member 23 from the electrolyte of the battery cell 20. In some embodiments, the liquid-repellent layer member 24 covers the entire surface of the heat insulation member 23. Certainly, in some other embodiments, the liquid-repellent layer member 24 may also cover only the part of the surface of the heat insulation member 23 that is immersed in the electrolyte. In some embodiments, the liquid-repellent layer member 24 is a liquid-repellent film, and the liquid-repellent film is attached to the surface of the heat insulation member 23. In some other embodiments, the liquid-repellent layer member 24 is a liquid-repellent coating, and the liquid-repellent coating is applied to the surface of the heat insulation member 23. The material of the liquid-repellent layer member 24 may be, but is not limited to, polytetrafluoroethylene, polyvinylidene fluoride, and polypropylene.

By adopting the above technical solution, the liquid-repellent layer member 24 can block the electrolyte in the battery cell 20 from entering the heat insulation pore 231 of the heat insulation member 23, thereby further reducing the heat spread speed between two adjacent electrode assemblies 22, and further improving the reliability performance of the battery cell 20.

In some other embodiments of the present application, the heat insulation member 23 is a liquid-repellent heat insulation member.

In other words, in this embodiment, the heat insulation member 23 is made of a material that has both heat insulation properties and liquid-repellent properties, for example, a surface branched fluorinated modified material of polyacrylonitrile, a surface branched fluorinated modified material of polycaprolactone, and a surface branched fluorinated modified material of polysulfone.

By adopting the above technical solution, the risk of the electrolyte in the battery cell 20 entering the heat insulation pore 231 of the heat insulation member 23 is effectively reduced, thereby further reducing the heat spread speed between two adjacent electrode assemblies 22, and further improving the reliability performance of the battery cell 20. Moreover, there is no need to additionally provide a liquid-repellent component on the surface of the heat insulation member 23, effectively simplifying the internal structure of the battery cell 20, thereby further improving the internal space utilization rate of the battery cell 20, and further improving the volume energy density of the battery cell 20.

In some embodiments of the present application, the thermal conductivity of the heat insulation member 23 is 0.01 W/m·K (watt/meter·degree) to 0.05 W/m·K (watt/meter·degree).

The thermal conductivity of the heat insulation member 23 may be determined according to actual application needs, for example, the thermal conductivity of the heat insulation member 23 may be 0.01 W/m·K, 0.02 W/m·K, 0.03 W/m·K, 0.04 W/m·K, 0.05 W/m·K, or the like.

By limiting the thermal conductivity of the heat insulation member 23 within the above range, the heat spread speed between two adjacent electrode assemblies 22 is further reduced, thereby further improving the reliability performance of the battery cell 20.

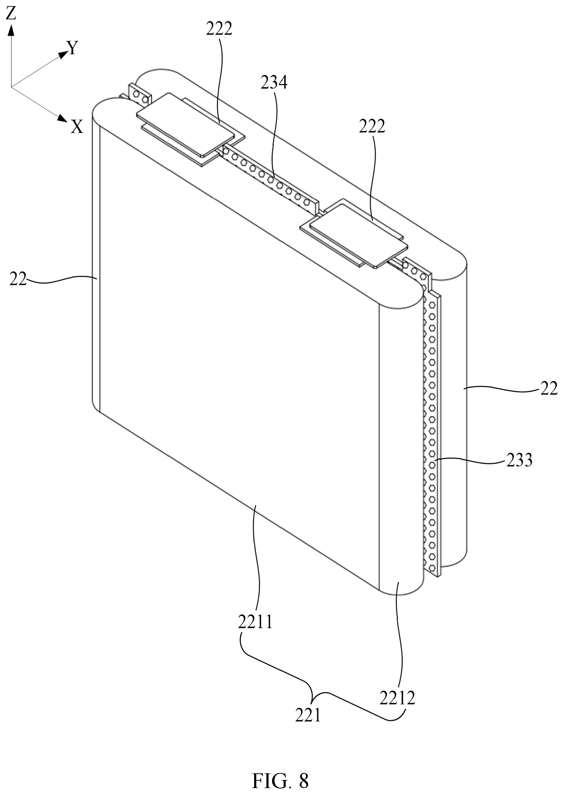

In some embodiments of the present application, referring to FIG. 8, the electrode assembly 22 includes a main body portion 221 and a tab 222, and the heat insulation member 23 is provided between two main body portions 221 and protrudes from the main body portion 221.

The main body portion 221 is the main body part of the electrode assembly 22, and the main body portion 221 may be made of a positive electrode sheet, a negative electrode sheet, and a separator by a winding process or a stacking process. The tab 222 is electrically connected to the main body portion 221, and the tab 222 is used to output or input current of the main body portion 221.

The heat insulation member 23 protruding from the main body portion 221 means: by using any plane perpendicular to the thickness direction of the heat insulation member 23 (for example, the Y-axis direction shown in FIG. 8) as a reference plane, the projection of the heat insulation member 23 along its thickness direction on the reference plane is a first projection, the projection of the main body portion 221 along the thickness direction of the heat insulation member 23 on the reference plane is a second projection, and at least part of the first projection protrudes from the edge of the second projection.

In some embodiments, referring to FIGs. 7 and 8 together, the heat insulation member 23 includes a heat insulation main body 232 and a first protruding portion 233, the first protruding portion 233 is provided on at least one side of the heat insulation main body 232 along the width direction of the battery cell 20 (for example, the X-axis direction shown in FIG. 8), and the first protruding portion 233 protrudes from the main body portion 221. The number of the first protruding portions 233 may be two, one first protruding portion 233 is provided on one side of the heat insulation main body 232 along the width direction of the battery cell 20, and the other first protruding portion 233 is provided on the other side of the heat insulation main body 232 along the width direction of the battery cell 20. The first protruding portion 233 may abut against the inner wall of the housing 21 or be spaced from the inner wall of the housing 21.

In some other embodiments, referring to FIGs. 7 and 8 together, the heat insulation member 23 includes a heat insulation main body 232 and a second protruding portion 234, the second protruding portion 234 is provided on a side of the heat insulation main body 232 facing the cover 25, and the second protruding portion 234 protrudes from the main body portion 221. The second protruding portion 234 may abut against the cover 25 or be spaced from the cover 25.

In still some other embodiments, referring to FIGs. 7 and 8 together, the heat insulation member 23 includes a heat insulation main body 232, a first protruding portion 233, and a second protruding portion 234. The number of the first protruding portions 233 may be two, one first protruding portion 233 is provided on one side of the heat insulation main body 232 along the width direction of the battery cell 20 and protrudes from the main body portion 221, and the other first protruding portion 233 is provided on the other side of the heat insulation main body 232 along the width direction of the battery cell 20 and protrudes from the main body portion 221. The second protruding portion 234 is provided on a side of the heat insulation main body 232 facing the cover 25 and protrudes from the main body portion 221.

It can be understood that in the case where the heat insulation member 23 is provided with the heat insulation pore 231, the heat insulation pore 231 may be provided in one or more of the heat insulation main body 232, the first protruding portion 233, and the second protruding portion 234. In some embodiments, the heat insulation pore 231 is provided on the heat insulation main body 232. In some other embodiments, the heat insulation pore 231 is provided on the heat insulation main body 232, the first protruding portion 233, and the second protruding portion 234.

By adopting the above technical solution, the heat insulation area of the heat insulation member 23 is effectively increased, and the speed of heat conduction from the outer side space of one electrode assembly 22 to the other electrode assembly 22 is effectively reduced, thereby further improving the reliability performance of the battery cell 20.

In some embodiments of the present application, referring to FIG. 8, the electrode assembly 22 has a wound structure and includes a main body portion 221 and a tab 222, the main body portion 221 includes a straight region 2211 and a corner region 2212 provided on a side portion of the straight region 2211, and the heat insulation member 23 is provided between two straight regions 2211 and protrudes from the straight region 2211.

The electrode assembly 22 has a wound structure, that is, the main body portion 221 is made of a positive electrode sheet, a negative electrode sheet, and a separator by a winding process. The straight region 2211 refers to a region with a parallel structure in the wound structure, that is, the negative electrode sheet, the positive electrode sheet, and the separator in the straight region 2211 are substantially parallel to each other, that is, the surfaces of various layers of the negative electrode sheet, the positive electrode sheet, and the separator of the electrode assembly 22 in the straight region 2211 are all planar surfaces. The corner region 2212 refers to a region with a bent structure in the wound structure, that is, the negative electrode sheet, the positive electrode sheet, and the separator in the corner region 2212 are all bent, and the surfaces of various layers of the negative electrode sheet, the positive electrode sheet, and the separator of the electrode assembly 22 in the corner region 2212 are all curved surfaces. The number of the corner regions 2212 is two, and the two corner regions 2212 are located on two opposite sides of the straight region 2211 along the width direction of the battery cell 20.

In some embodiments, the heat insulation member 23 includes a heat insulation main body 232 and a first protruding portion 233, the number of the first protruding portions 233 may be two, one first protruding portion 233 is provided on one side of the heat insulation main body 232 along the width direction of the battery cell 20, the other first protruding portion 233 is provided on the other side of the heat insulation main body 232 along the width direction of the battery cell 20, and the first protruding portion 233 protrudes from the straight region 2211 but does not protrude from the corner region 2212.

In some other embodiments, the heat insulation member 23 includes a heat insulation main body 232 and a first protruding portion 233, the number of the first protruding portions 233 may be two, one first protruding portion 233 is provided on one side of the heat insulation main body 232 along the width direction of the battery cell 20, the other first protruding portion 233 is provided on the other side of the heat insulation main body 232 along the width direction of the battery cell 20, and the first protruding portion 233 protrudes from the corner region 2212.

By adopting the above technical solution, the heat insulation area of the heat insulation member 23 is effectively increased, and the speed of heat conduction from the outer side space of one electrode assembly 22 to the other electrode assembly 22 is effectively reduced, thereby further improving the reliability performance of the battery cell 20.

In some embodiments of the present application, referring to FIGs. 3 to 8 together, the battery cell 20 includes a housing 21, a cover 25, an electrode assembly 22, a heat insulation member 23, and a liquid-repellent layer member 24. The housing 21 has an accommodating cavity 211, and the cover 25 covers the opening of the housing 21 to isolate the accommodating cavity 211 from the external environment of the battery cell 20. The number of the electrode assemblies 22 is multiple, and the multiple electrode assemblies 22 are accommodated in the accommodating cavity 211. The heat insulation member 23 is provided between two adjacent electrode assemblies 22, where the thickness H of the heat insulation member 23 and the energy E of the electrode assembly 22 satisfy a relationship: 25 Wh/mm ≤ E/H ≤ 750 Wh/mm. The heat insulation member 23 is provided with heat insulation pores 231, the pore diameter r of the heat insulation pore 231 is 10 nm-50 nm, the number of the heat insulation pores 231 is multiple, and the porosity N of the heat insulation member 23 is 95%-98%. At least part of the heat insulation member 23 protrudes from the outside of the gap between two adjacent electrode assemblies 22. The liquid-repellent layer member 24 covers the surface of the heat insulation member 23.

In some embodiments of the present application, the battery cell 20 includes at least one of a sodium-ion battery cell, a sodium metal battery cell, a ternary lithium battery cell, and a lithium metal battery cell.

In some embodiments, the battery cell 20 is a sodium-ion battery cell, and the heat insulation member 23 is provided between two adjacent electrode assemblies 22 of the sodium-ion battery cell.

By adopting the above technical solution, under the premise that the heat insulation performance of the heat insulation member 23 can meet the heat insulation demand between two adjacent electrode assemblies 22, the volume energy density of the above various battery cells 20 is effectively increased.

According to a second aspect, referring to FIG. 2, an embodiment of the present application further provides a battery 100, including the battery cell 20 described in any one of the above embodiments.

Since the battery 100 provided in the embodiments of the present application adopts the battery cell 20 described in any one of the above embodiments, the volume energy density of the battery 100 is effectively increased.

According to a third aspect, referring to FIG. 1, an embodiment of the present application further provides an electric device, including the above battery 100.

Since the electric device provided in the embodiments of the present application adopts the battery 100 described in any one of the above embodiments, the endurance performance of the electric device is effectively improved.

The above descriptions are only preferred embodiments of the present application and are not intended to limit the present application. Any modifications, equivalent substitutions, improvements, and the like made within the spirit and principles of the present application shall be included in the protection scope of the present application.

## Claims

1. A battery cell, **characterized in that** the battery cell comprises:
a housing, having an accommodating cavity;
multiple electrode assemblies, accommodated in the accommodating cavity;
and
a heat insulation member, provided between two adjacent electrode assemblies;
wherein a thickness H of the heat insulation member and an energy E of the electrode assembly satisfy a relationship: 25 Wh/mm ≤ E/H ≤ 750 Wh/mm.

2. The battery cell according to claim 1, **characterized in that** the thickness H of the heat insulation member is 1 mm-6 mm.

3. The battery cell according to claim 1 or 2, **characterized in that** the heat insulation member is provided with heat insulation pores.

4. The battery cell according to claim 3, **characterized in that** a pore diameter r of the heat insulation pores is 10 nm-50 nm.

5. The battery cell according to claim 3 or 4, **characterized in that** the number of the heat insulation pores is multiple, and a porosity N of the heat insulation member is 95%-98%.

6. The battery cell according to any one of claims 3 to 5, **characterized in that** one port of the heat insulation pore penetrates through a side of the heat insulation member facing one electrode assembly, and the other port of the heat insulation pore penetrates through a side of the heat insulation member facing the other electrode assembly.

7. The battery cell according to any one of claims 3 to 6, **characterized in that** the battery cell further comprises a liquid-repellent layer member, and the liquid-repellent layer member covers a surface of the heat insulation member.

8. The battery cell according to claim 7, **characterized in that** the liquid-repellent layer member comprises at least one of a polytetrafluoroethylene member, a polyvinylidene fluoride member, and a polypropylene member.

9. The battery cell according to claim 7 or 8, **characterized in that**
the liquid-repellent layer member is a liquid-repellent film, and the liquid-repellent film is attached to the surface of the heat insulation member; or
the liquid-repellent layer member is a liquid-repellent coating, and the liquid-repellent coating is applied to the surface of the heat insulation member.

10. The battery cell according to any one of claims 3 to 6, **characterized in that** the heat insulation member is a liquid-repellent heat insulation member.

11. The battery cell according to any one of claims 1 to 10, **characterized in that** the thickness H of the heat insulation member and the energy E of the electrode assembly satisfy a relationship: 150 Wh/mm ≤ E/H ≤ 550 Wh/mm.

12. The battery cell according to any one of claims 1 to 11, **characterized in that** a thermal conductivity of the heat insulation member is 0.01 W/m·K-0.05 W/m·K.

13. The battery cell according to any one of claims 1 to 12, **characterized in that** the electrode assembly comprises a main body portion and a tab, and the heat insulation member is provided between two main body portions and protrudes from the main body portion.

14. The battery cell according to any one of claims 1 to 12, **characterized in that** the electrode assembly has a wound structure and comprises a main body portion and a tab, the main body portion comprises a straight region and a corner region provided on a side portion of the straight region, and the heat insulation member is provided between two straight regions and protrudes from the straight region.

15. The battery cell according to any one of claims 1 to 14, **characterized in that** the heat insulation member comprises at least one of a porous silicon member, an aerogel member, a polystyrene member, a rock wool member, a glass wool member, and a polyurethane foam member.

16. The battery cell according to any one of claims 1 to 15, **characterized in that** the battery cell is a sodium-ion battery cell, a sodium metal battery cell, a ternary lithium battery cell, or a lithium metal battery cell.

17. A battery, **characterized in that** the battery comprises the battery cell as described in any one of claims 1 to 16.

18. An electric device, **characterized in that** the electric device comprises the battery as described in claim 17.
